**Europäisches Patentamt**

**European Patent Office**

**Office européen des brevets**

(19)

(11) Publication number: **0 066 172**

**A1**

(12) # EUROPEAN PATENT APPLICATION

(21) Application number: **82104318.9**

(22) Date of filing: **17.05.82**

(51) Int. Cl.³: **C 04 B 43/00**
**C 04 B 19/00, C 04 B 21/08**

(30) Priority: **18.05.81 US 264782**

(43) Date of publication of application:
**08.12.82 Bulletin 82/49**

(84) Designated Contracting States:
**AT BE CH DE FR GB IT LI LU NL SE**

(71) Applicant: **DIAMOND SHAMROCK CORPORATION**
**717 North Harwood Street**
**Dallas Texas 75201(US)**

(72) Inventor: **Temple, Ralph E.**
**10009 Crest Ridge Drive**
**Chardon Ohio 44024(US)**

(72) Inventor: **McDowell, Donald L.**
**16400 Joann Drive**
**Chardon Ohio 44024(US)**

(72) Inventor: **Mayer, Stanley E.**
**7861 Kinsman Road**
**Novelty Ohio 44072(US)**

(74) Representative: **Weickmann, Heinrich, Dipl.-Ing. et al,**
**Patentanwälte Dipl.-Ing. H. Weickmann Dipl.-Phys.Dr. K.**
**Fincke Dipl.-Ing. F.A. Weickmann Dipl.-Chem. B. Huber**
**Dr.-Ing. H. Liska Möhlstrasse 22**
**D-8000 München 86(DE)**

(54) **Insulating composition comprising a foamed adhesive admixed with particulate insulating material.**

(57) An improved insulating composition has been discovered which has general use in the construction field for providing a thermal and/or acoustical barrier. This novel composition is formulated from a particulate insulating material (e.g., fibers or porous solids) and a foamed binder component based upon an organic or water-soluble silicate adhesive material. The composition requires a relatively minor amount of adhesive and is easily handled and applied where the resulting barrier has a low density and excellent insulating properties.

EP 0 066 172 A1

## INSULATING COMPOSITION COMPRISING A FOAMED
## ADHESIVE ADMIXED WITH PARTICULATE INSULATING MATERIAL

### BACKGROUND OF THE INVENTION

(1) Field of the Invention

The present invention relates to a low-density insulating coating and molding composition which provides an effective thermal and sound barrier.

More specifically, the composition of the invention is formulated from a prefoamed adhesive admixed with particulate insulating material (e.g., fibers and/or porous solids) which composition can be applied to a variety of substrates by conventional techniques.

(2) State of the Art

Coating and molding compositions containing porous solids and similar type materials, which are adaptable to being "sprayed-on" a surface, have in the past found use in specific applications. For example, "spray-on" mortar compositions or "gunite," as they have become known in the art, have been useful for fireproofing various structural substrates. Also, high temperature thermal coatings have been developed to spray-on surfaces such as ingot walls. These and similar type compositions are disclosed in U.S. Patents 3,522,069; 3,687,700; 3,912,838 and 4,227,932. While these compositions have been found to be satisfactory for their specific uses, they are not adaptable for general use in the construction field. Due to dwindling energy resources combined with the resultant high costs of the available energy supplies, there is a need for an effective insulating material that can easily be applied to, in particular, vertical surfaces or ceilings of homes, office buildings, maintenance buildings and the like.

Presently, the only available insulating material that can be applied by spraying or similar techniques and has found general use in the construction field is "spray-on cellulose." This material, however, has not been found to be all that satisfactory because of several inherent disadvantages. The major disadvantage or problem is that the cellulose, when applied to a surface, must have a relatively high water content so that the material will "stick" or adhere to the particular surface. Because of the high water content, coatings of only up to about an inch can be applied in a single pass or application. Also, the water content results in long drying times which clearly affects costs, particularly if a thick coating is desired. The high water content can also result in corrosion problems and the like, particularly if additives are present that would render the water acidic. Once the cellulose is dry, it may become flammable. Furthermore, the dry cellulose surface is not readily adaptable to painting or to the application of decorative coatings.

In the past, various lightweight aggregate materials of the type which have been found to be useful in the present invention have found use for a number of insulating purposes. Typical lightweight aggregate materials include expanded vermiculite, expanded perlite, fly ash, expanded shale, expanded clay and other like materials, and/or blends or mixtures thereof. A particularly useful lightweight aggregate material is a lightweight alkali-metal silicate aggregate having excellent insulating properties and is described in U.S. Patents 3,719,510 and 4,203,773 both to Temple et al. It is disclosed in these patents that this aggregate material has a wide range of use as an insulating material, including spray-on insulation. There is no disclosure, however, with regard to prefoaming the binder.

Organic or latex foam binder systems which do not contain porous solid materials have been described in the art for use in a variety of different applications. For example, U.S. Patent 3,475,266 to Strassel describes a polyurethane foam coating adaptable to being sprayed upon the surface of a molded plastic composition. A similar type composition is described in U.S. Patent 4,098,944 to Pollock which is used as a carpet backing. There has been described in the art articles of manufacture developed for specific uses where porous solid materials have been added to organic/polymer foam materials. Such specific use products are described in U.S. Patent 3,917,547 to Massey disclosing polymer foam compositions, especially polyurethane foams, to which has been added cenospheres (dervied from fly ash) to improve and extend the physical characteristics of the polymer foam composition; and U.S. Patent 3,637,456 to Mao disclosing imitation leather prepared from polyvinyl chloride foam which has been reinforced by incorporating textile fibers into the foam.

It would, therefore, be desirable to provide an insulating coating composition which is adherent to a wide variety of surfaces, easily applied by conventional techniques, particularly by spraying, having a low, dry bulk density and in general find application throughout the construction field. Further desirable advantages would reside in a fast drying insulating composition and a composition requiring a very low amount of binder relative to the content.

## SUMMARY OF THE INVENTION

In accordance with the present invention, an insulating composition having broad spectrum use in the construction field has been discovered. It has been found, in accordance with the invention, that an insulating coating composition has been developed which can easily be applied by conventional techniques, particularly by spraying, to a variety of different substrates and rapidly dries to a low, dry bulk density. It has further been discovered that the dried insulating coating exhibits excellent thermal and acoustical insulating properties as well as providing protection against fire damage.

Further in accordance with the invention, a novel process for preparing and applying the insulating coating composition of the present invention has been discovered. It was found that by foaming the binder or adhesive prior to admixture with the particulate insulating material, i.e., fibrous and/or porous solids, several unexpected advantages resulted. The ease of application of the composition increased substantially while the drying time was reduced significantly. It was also found that the efficiency of application substantially increased, particularly when the composition was applied by spraying where loss due to rebound was significantly reduced. Other advantages realized by the newly discovered technique of this invention reside in the ability to apply much thicker layers of the composition to a particular substrate in a single "pass" or application and the greatly reduced amount of binder required to obtain an adherent insulating coating.

Still further in accordance with the invention, the above-described insulating coating composition can be formulated from a wide variety of commercially available components. It was found that the resultant coating after application and drying can be smoothed and painted forming the interior/exterior surface of the particular substrate/structure to which the composition was applied. In addition, the insulating composition of the present invention, other than use as an insulating coating on a substrate, can be fabricated into panels and similar other molded products for a wide variety of other uses.

Moreover, the process of the invention can be adapted to greatly suppress dust formation during the installation of loose lightweight aggregate or the like insulation in, e.g., attics and walls.

These and other aspects of the invention will become clear to those skilled in the art upon the reading and understanding of the specification.

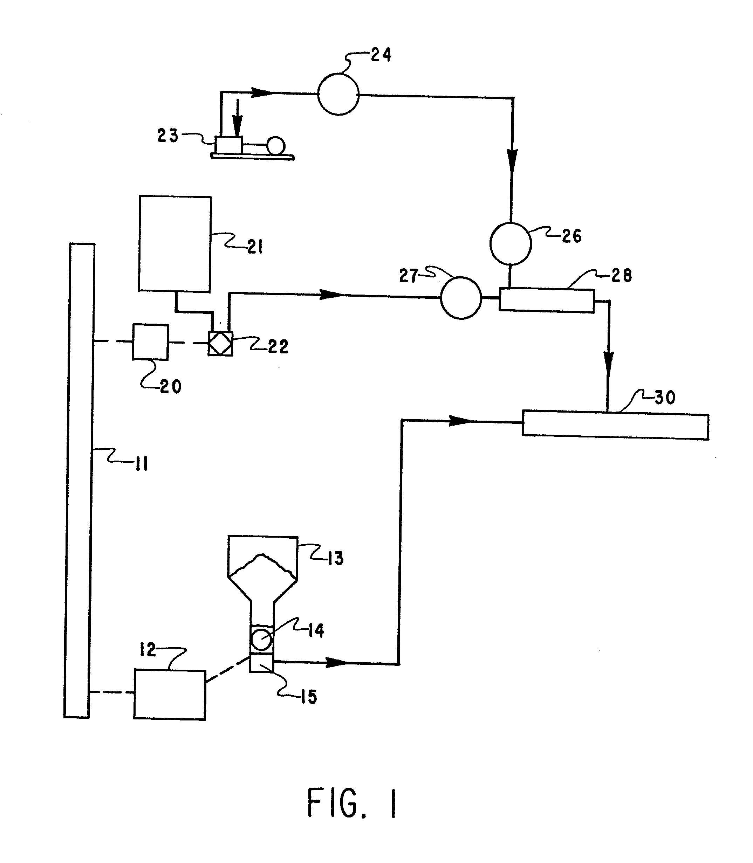

## BRIEF DESCRIPTION OF THE DRAWING

The figure of the drawing is a diagram of process equipment and components necessary for spraying the insulating composition of the invention on a surface in accordance with the process of the present invention.

## DESCRIPTION OF THE PREFERRED EMBODIMENTS

This invention involves, in general, the mechanical foaming of an adhesive component, blending fibrous and/or porous solids with the foamed adhesive/binder system and applying this blend to a surface to be insulated or molding the blend into an insulating product.

The adhesives/binders useful in the method of the invention are any of the known and commercially available organic or water-soluble, inorganic alkali metal silicates. It will be recognized by those skilled in the art that the viscosity of the adhesive/binder will affect the flow characteristics, foaming characteristics and the like of the particular adhesive/binder to be used. Thus it is highly desirable to use an adhesive/binder of which the viscosity can be adjusted as necessary. Such adhesives/binders should therefore be water-dispersible or at least water emulsifible. It is also preferred that the particular adhesive/binder have a good air-drying property. There are a number of organic binder systems which are commercially available and meet these requirements. Such available organic binder systems usable herein include epoxy, polyester, acrylic, phenolic, polyvinyl alcohol and starch based binders as well as mixtures thereof. As previously mentioned, water-soluble, inorganic alkali-metal silicate binders are also useful in the method of the present invention, preferably a sodium silicate binder system. In addition, the admixture of the same silicate binder with the previously mentioned organic based binder systems has also been found to be useful. For the purposes of this invention, the vinyl acetate based adhesives, acrylate based adhesives and starch based adhesives are preferred. The most preferred binder/adhesive systems for the purposes of this invention are the commercially available vinyl acetate and/or acrylate based emulsion systems having a viscosity in the range of 500 cps to 10,000 cps and a solids content in the range of 40 to 60 percent by weight.

It has been found particularly desirable to include a surface active agent in the adhesive/binder component to aid in obtaining the desired degree of foaming. Useful surface active agents (soaps) for the present invention include most amphoteric, anionic, cationic and nonionic surface active agents or mixtures thereof. Surface active agents among which have been found to be useful in the present invention include such commercially available agents as BARLOX 12, CALSOFT L 60, AMPHOTERG KS, AROMOX C 12 and CALSUDS 81. The amount of surface active agent added to the adhesive/binder component should be an amount sufficient to give a high foam rate so as to effectively disperse the adhesive/binder component and yet not adversely affect the adhesiveness of the particular binder. Therefore, the amount of surface active agent added to 100 parts binder will generally range in the amount of about 0.1 part to about 5.0 parts. Most preferably, the amount of surface active agent added to 100 parts of binder will be 0.5 part to 2.5 parts.

The specific particulate insulating material which may be used in the method of the invention are most mineral and polymer fibers or porous solids. Among polymer solids that may especially be mentioned are nylons, polyesters, polystyrenes, polyurethanes, polyvinyl chloride, styrene-butadiene rubber and the like as well as natural polymers such as wood products (e.g., cellulose) and rubber. Mineral solids may include vermiculite, perlite, fly ash, vitrious fibers, metal silicates, clay and expanded forms thereof. The preferred porous solids, for the purposes of this invention, are materials known as lightweight aggregate materials which include the expanded forms of various minerals such vermiculate, perlite, fly ash and the like. It has been found that the most preferred porous solid for the purposes of the present invention is a lightweight silicate aggregate material described in U.S. Patents 3,719,510 and 4,203,733, the disclosures of same are herein incorporated by reference. This aggregate material is extremely lightweight having a very low, dry bulk density and having excellent insulating properties.

The formulation of the insulating composition of the invention can be accomplished by either adding the surface active agent to the binder system and foaming this admixture by mechanical agitation, compressed air or similar means; or by generating a foam with the surface active agent and water by any of the previously mentioned techniques and then mixing the adhesive/binder into the foam. The fibrous and/or porous solid insulating material can then be blended into the foam in many ways including blowing the foamed adhesive/ binder system and particulate insulating material into a common mixing nozzle for blowing onto a surface. The amount of the binder system including surface active agent combined with particulate insulating material must be sufficient to result in adequate adhesion of the particulate insulating material to the particular surface and at the same time yield a dried insulation having a dry bulk density of preferably less than 10 pounds per cubic foot and most preferably less than 4 pounds per cubic foot. For the purposes of the present invention, the ratio of particulate insulating material to adhesive/binder system including surface active agent can range up to about 25:1, where the ratio of particulate insulating material to adhesive/binder alone can range up to about 53:1. Clearly the lower ratios are operable within the scope of the present invention; however, such factors as materials' cost and availability, structural integrity of the end product, desired insulating effect and the like will be determinative of the lower limit depending upon the desired use. It is pointed out that applying the insulating coating in the same manner, except without prefoaming the adhesive/ binder, would require approximately more than 4 times the amount of the adhesive/binder that is used in the present invention. The application of the insulating composition of the present invention can be achieved by a variety of techniques including spreading on the desired surface by troweling or with a doctor knife as well as the preferred method of blowing or spraying the insulating composition of the present invention onto the desired surface. The insulating composition of the invention can also be molded or fabricated into panels or other similar articles for use in a variety of different insulating functions.

It has been found in accordance with the present invention that optimum results are obtained when indoor application is made at less than 85 percent relative humidity. For the best results, the substrate should be clean, dry and free from foreign matter and the substrate temperature should be above 32°F and preferably 50°F or above.

The specific equipment or apparatus employed for application of the invention insulating composition by spraying is not critical. Most equipment and apparatus suitable for pneumatic application of coating compositions to various substrates can be used or adapted for the purposes of this invention. Such an apparatus is described in U.S. Patent 3,912,838, issued October 14, 1975. In other words, such pieces of equipment as compressors, generators, pumps and the like, which are standard "off-the-shelf" units, are suitable for the purposes of the present invention.

One embodiment of the present invention is illustrated in the diagram of the drawing. While one feature of the invention is to be further described in connection with the attached drawing diagram, it is intended that the drawing included as a part of this specification be illustrative of a preferred embodiment of the invention and should in no way be considered a limitation on the scope of the invention. Referring now to the drawing, the diagramed process illustrates the necessary apparatus and equipment for applying the invention insulating coating on a surface by spraying. The combined foamed adhesive/binder system with fibrous and/or porous solids is projected onto a surface from spray nozzle 30. It is at spray nozzle 30 where the foamed adhesive/binder is admixed with the desired particulate insulating material. The particulate insulating material is delivered to spray nozzle 30 from hopper 13 by positive displacement blower 15 which is operated by AC blower motor 12 connected to electrical supply 11. The rate of flow of the particulate insulating material is controlled by rotary feed valve 14. For the purposes of the present invention, the particulate insulating material density can range from about 1 lb/cu.ft. to about 35 lbs/ cu.ft., and the flow rate of the insulating material should range from about 0 to about 3 cu.ft./min. The adhesive/binder, surface active agent system is delivered to spray nozzle 30 from reservoir 21 by positive displacement pump 22 which is powered by a variable speed DC pump motor connected to electrical supply 11. The adhesive/binder, surface active agent system is foamed by foam gun 28 prior to passage into spray nozzle 30. Air pressure is provided to foam gun 28 by air compressor 23 where the air pressure is regulated by constant pressure valve 24. Flow into the foam gun is controlled by valves 26 and 27. The air compressor 23 can be any of the conventionally used standard units, e.g., piston, rotary, reciprocating or diaphragm type. The same is true for valves 26 and 27 where a ball, gate, globe, angle, plug cock and the like valves can be used. The air pressure provided to foam gun 28 can range from about 25 psig to about 200 psig and the adhesive/surface active agent system flow rate can range from about 0 to about 1.5 gallons per min. depending upon the particulate insulating material flow rate. The adhesive/surface active agent system is generally maintained at ambient temperatures, however, higher temperatures will give improved cure or setting times. In general, it should be recognized that such considerations as the particular components making up the insulating composition, the weather, the particular substrate to be coated, the desired R-value or insulating effect and other such factors will determine the specific operating conditions.

As previously discussed, the formulation of the insulating composition of the invention will be determined by such factors as the desired density of dry product, the substrate, the ambient conditions and the like. However, for general purpose use, the basic formula, with no intent to be so limited, is as follows:

1.  0.1-5.0 parts Surface Active Agent (Concentrate)

2.  33-66 parts Water 66-33 parts Adhesive/Binder

3.  800 to 1500 parts of Particulate Insulating Material (e.g., Lightweight Silicate Aggregate)

This basic formulation may optionally include other additives and components such as various stabilizers, i.e., foam stabilizers, etc.; antioxidants; curing agents; other filler materials; flame retardants; tackifying agents and the like. Best results have been achieved when the particulate insulating material is uniformly mixed with the foamed adhesive/binder. While it is generally desirable to keep the amount of adhesive employed to a minimum, increasing the concentration or amount of adhesive/binder increases the rigidity of the final product and allows the insulating composition to be molded easier.

The thus formulated insulating composition of the present invention can then find general use in the construction field serving a broad spectrum of insulating and coating functions. This composition can be applied to a wide variety of vertical and horizontal surfaces including walls, ceilings, roof decks, structural steel members, air ducts, pipe and the like. The applied insulating coating composition of the present invention thus forming an exposed surface which can be painted or have some other decorative treatment effected thereon. The insulating composition of the invention can also form an insulating medium between two substrates such as between the exterior wall and interior wall of a home or building or even in an automobile.

It has also been found that the process of the invention is useful for suppressing dust generated during the installation of insulation in loose form, e.g., lightweight aggregate or cellulose. As previously indicated, lightweight aggregate, specifically lightweight silicate aggregate, provides an excellent insulating medium, particularly in homes. However, when blowing this lightweight aggregate or a similar type insulation in loose form, a significant amount of dust is generated making it difficult to see, to breathe and in turn increasing the time required to complete the installation. It was discovered in accordance with the present invention that by blowing the loose insulation through foam optionally containing an adhesive/binder, essentially no dust is formed. This technique therefore results in the job being completed more quickly in addition to being less troublesome to the individuals installing the insulation.

From the previous discussion, the insulating composition and process of the present invention, as further illustrated in the examples below, is found to be advantageous over the compositions and methods of the art. The following examples will serve to further illustrate the operation and advantages of the invention. These examples should not be considered, however, as a limitation upon the scope of the present invention where such scope is defined only by the claims.

## EXAMPLE 1

For this example, a three component adhesive/surface active agent system was used. A two percent CALSUDS 81 solution, this solution was prepared by filling a 2 liter beaker to the 1800 mL mark and adding 36 mL of CALSUDS 81 concentrate with mixing, was foamed to which National Starch 8070 adhesive containing 7 percent Acrysol ASE 95 was injected prior to passage into the spray nozzle. The thus foamed adhesive was admixed with lightweight silicate aggregate in the spray nozzle and sprayed onto a metal wall. The adhesive flow rate was maintained at approximately 1.5 gallons per minute where the lightweight aggregate was being fed at a rate of 2 cubic feet per minute. The mixture adhered well to the wall and began to set up immediately.

## EXAMPLE 2

Example 1 was repeated with the exception that Strong 901 adhesive was substituted for the National Starch 8070 adhesive. Similar results to Example 1 were obtained with an adherent insulating coating being formed on the metal wall.

## EXAMPLE 3

The procedure of Example 1 was generally repeated, however, for this example, Strong 400 adhesive containing no Acrysol was admixed with 2 percent CALSUDS 81 to which had been added a 0.25 percent Carbopol solution. The Adhesive/Surface Active Agent mixture was foamed after which a finer mesh (-40 to +60 mesh) intermediate grade lightweight silicate aggregate was admixed with the foamed solution in a spray nozzle for spraying onto a surface. The average lightweight silicate aggregate flow rate was 1.71 cubic feet per minute. The surface active agent flow rate averaged 0.59 gallons per minute and the Strong 400 adhesive was used at an average rate of 0.71 gallons per minute. This admixture was applied to the ceiling of a maintenance building. The resultant applied insulation adhered very well to the ceiling where the setting time for the material was accelerated due to the temperature of the metal roof being at $120^{O}F$.

## EXAMPLE 4

The procedure of Example 3 was repeated using the same components with the exception that a coarser mesh lightweight silicate aggregate (-10 to +40 mesh) was substituted in place of the Intermediate grade lightweight silicate aggregate. The average flow rate of the coarser mesh aggregate was 2.03 cubic feet per minute while the adhesive flow rate was 0.71 gallons per minute, and the surface active agent solution flow rate averaged 0.52 gallons per minute. Similar results to Example 3 were obtained with this composition.

## EXAMPLE 5

For this example, the insulating composition was prepared in batch. To 60 mL of 0.5 percent BARLOX 12 solution, contained in a Hobart Mixer having a whip attachment, was added during mixing 100 mL of Grade 40 sodium silicate binder. To this foamed binder system was admixed 1500 mL of lightweight silicate aggregate having a density of 3.2 g/mL. The thus prepared insulating composition of this example was applied to a sheet of aluminum foil and allowed to dry overnight. The dried composition formed a rigid insulating panel.

## EXAMPLE 6

The procedure of Example 5 was repeated except 30 ml of Strong 400 adhesive was admixed with 100 ml of the sodium silicate Grade 40 binder. The applied insulating composition was allowed to dry where the resultant dried product was found to form a rigid panel.

## EXAMPLE 7

The procedure of Example 1 was generally repeated except two separate trials were run where vermiculite was substituted for the lightweight silicate aggregate in one trial, and perlite was substituted for the lightweight silicate aggregate in the second trial. Also the surface active agent was admixed prior to foaming with the National Starch 8070 adhesive which contained no Acrysol. The insulating composition from both trials were applied to the metal wall of a maintenance building and allowed to dry. An adherent coating of up to an inch or more was obtained which was rigid upon drying. Testing sample sections from each trial revealed that the vermiculite gave an R-value of 2.3 with a density of 8 to 10 pounds per cubic foot, and the perlite yielded an R-value of 2.1 with a dry bulk density of 8 to 12 pounds per cubic foot (the density was difficult to determine because a precise volume was not known).

## EXAMPLE 8

Prior to blowing loose lightweight silicate aggregate insulation into an attic, a two percent CALSUDS 81 solution in water was foamed. The loose insulation was then blown thru the foam during its installation. No dust formation was observed during the installation.

## EXAMPLE 9

The procedure of Example 5 was generally repeated, however, 40 mL of Strong 400 adhesive was substituted for the sodium silicate binder and 40 mL of 2 percent CALSUDS 81 surface active agent was substituted for the BARLOX 12. Also, in place of the lightweight silicate aggregate, 2000 mL of aerated fiberglass (density 0.8 lbs./cu.ft.) was added continuously to the foamed adhesive system. The fiberglass and foamed adhesive mixture was applied to a sheet of aluminum foil and allowed to dry overnight. The dried composition formed a rigid insulating panel.

The present invention has been set forth and further described by means of particular preferred embodiments of the examples. However, these examples are provided by way of illustration and not by way of limitation, where various modifications thereto will be apparent to those skilled in the art. The invention is therefore defined solely by the appended claims.

WHAT IS CLAIMED IS:

1. A low-density insulating composition consisting essentially of:

A). an adhesion effective amount of a foamed binder component which comprises i) water, ii) an organic or water-soluble silicate based adhesive and iii) an effective foam producing amount of a surface active agent; and

B). a major amount relative to component A) of a particulate insulating material.

2. The composition of Claim 1 wherein the particulate insulating material is selected from the group consisting of lightweight silicate aggregate, vermiculite, perlite, fly ash, polystyrene, cellulose, expanded forms thereof, vitrious fibers and mixtures thereof; wherein said insulating material is in the form of fibers or porous solids and is present in the amount of said insulating material relative to said binder component ranging up to about 25:1; and wherein the dried composition has a dry bulk density of less than about 9.0 pounds per cubic foot.

3. The composition of Claims 1 or 2 wherein the adhesive is based upon material selected from the group consisting of epoxy resins, polyvinyl alcohol, acrylates, polyvinyl acetate, starch, sodium silicate or mixtures thereof.

4. The composition of Claims 1 or 2 wherein the surface active agent is present in an amount of about 1 percent to about 4 percent by weight based upon the binder component.

5. The composition of Claim 1 wherein the particulate insulating material is an expanded lightweight silicate aggregate material; the surface active agent is present in the amount of about 2 percent by weight based upon the binder component; and the dried composition has a dry bulk density in the range of about 1.0 to about 5.0 pounds per cubic foot.

6. A process for providing a thermal and/or acoustical barrier on a substrate, which process consisting essentially of:

A). combining an adhesion effective amount of a foamed organic or water-soluble silicate based binder component with a major amount of a particulate insulating material; and

B). applying the resulting foamed binder, particulate insulating material admixture to a substrate whereupon the applied admixture dries to form a thermal and/or acoustical barrier having a density of less than 35.0 pounds per cubic foot.

7. The process of Claim 6 wherein the particulate insulating material is selected from the group consisting of lightweight silicate aggregate, vermiculite, perlite, fly ash, polystyrene, cellulose, expanded forms thereof, vitrious fibers and mixtures thereof; and wherein said insulating material is present in an amount relative to the binder component ranging up to about 25:1.

8. The process of Claims 6 or 7 wherein the dried barrier has a density of less than 9.0 pounds per cubic foot.

9. The process of Claim 8 wherein the foamed binder, particulate insulating material admixture is applied by spraying; the particulate insulating material is an expanded lightweight silicate aggregate material; the foamed binder contains a compatible surface active agent; and the applied mixture dries to a density of from about 1.0 pound per cubic foot to about 5.0 pounds per cubic foot.

10. A thermal and/or acoustical barrier consisting essentially of a dimensionally stable, coalesced mixture of a major amount of a particulate insulating material and an adhesion effective amount of a foamed organic or water-soluble silicate based binder; wherein said barrier upon drying has a dry bulk density in the range of from about 1.0 pound per cubic foot to about 35.0 pounds per cubic foot.

11. The barrier of Claim 10 wherein the particulate insulating material is selected from the group consisting of lightweight silicate aggregate, vermiculite, perlite, fly ash, polystyrene, cellulose, expanded forms thereof, vitrious fibers and mixtures thereof; and the barrier has a dry bulk density of less than about 9.0 pounds per cubic foot.

12. The barrier of Claim 11 wherein the particulate insulating material is an expanded lightweight silicate aggregate material, and the dry bulk density of said barrier is less than about 4.0 pounds per cubic foot.

13. The barrier of Claims 10, 11 or 12 wherein said barrier is a fabricated insulating panel.

14. The barrier of Claims 10, 11 or 12 wherein said barrier is adhered to a metal, wood, glass or polymer substrate.

15. A method for suppressing dust formation during the installation of insulation in loose or bulk form consisting essentially of blowing the loose insulation through a foam comprised of water and a surface active agent.

16. The method of Claim 15 wherein the loose insulation is a lightweight silicate aggregate and the foam mixture additionally contains an adhesive.

FIG. 1

European Patent
Office

**EUROPEAN SEARCH REPORT**

Application number

EP 82 10 4318

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 043 238 (A.C.I. OPERATIONS PTY. LTD.) * Claims 1,2,5,8-10,12; page 4, paragraph 1 * | 1-14 | C 04 B 43/00<br>C 04 B 19/00<br>C 04 B 21/08 |
| X,Y | FR-A-2 048 393 (MEDICAL PATENTS, INC.) * Claim 1 * | 1,6 | |
| Y | DE-A-2 336 400 (CROWN LYNN POTTERIES LTD.) * Claims 1-17 * | 1-14 | |
| A | DE-A-2 422 575 (MASCHKE GEB. LIPPELT, ERIKA) * Claim 1 * | 1 | |

|  |  |
|---|---|
|  | TECHNICAL FIELDS SEARCHED (Int. Cl. 3) |
|  | C 04 B<br>E 04 B |

The present search report has been drawn up for all claims

| Place of search | Date of completion of the search | Examiner |
|---|---|---|
| THE HAGUE | 25-08-1982 | STANGE R.L.H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document